(19) Europäisches Patentamt
European Patent Office
Office européen des brevets

(11) EP 0 707 045 B1

(12) **EUROPÄISCHE PATENTSCHRIFT**

(45) Veröffentlichungstag und Bekanntmachung des Hinweises auf die Patenterteilung:
**26.04.2000 Patentblatt 2000/17**

(51) Int Cl.7: **C08L 69/00**, C08K 5/523

(21) Anmeldenummer: **95115513.4**

(22) Anmeldetag: **02.10.1995**

(54) **Flammgeschützte, thermoplastische Polycarbonat-Formmassen**

Flame resistant thermoplastic polycarbonate moulding compositions

Compositions à mouler ignifugées à base de polycarbonates

(84) Benannte Vertragsstaaten:
**DE ES FR GB IT NL**

(30) Priorität: **14.10.1994 DE 4436776**

(43) Veröffentlichungstag der Anmeldung:
**17.04.1996 Patentblatt 1996/16**

(73) Patentinhaber: **BAYER AG**
**51368 Leverkusen (DE)**

(72) Erfinder:
- **Fuhr, Karl, Dr.**
  **D-47803 Krefeld (DE)**
- **Eckel, Thomas, Dr.**
  **D-41540 Dormagen (DE)**
- **Wittmann, Dieter, Dr.**
  **51375 Leverkusen (DE)**
- **Alberts, Heinrich, Dr.**
  **D-51519 Odenthal (DE)**

(56) Entgegenhaltungen:
**EP-A- 0 272 441** **EP-A- 0 594 021**
**EP-A- 0 645 422** **DE-A- 4 040 243**

- **CHEMICAL ABSTRACTS, vol. 119, no. 8, 23.August 1993 Columbus, Ohio, US; abstract no. 73855, XP002001695 & JP-A-04 298 554 (NIHON GE PLASTICS, LTD.) 22.Oktober 1992**
- **PATENT ABSTRACTS OF JAPAN vol. 95, no. 4, 31.Mai 1995 & JP-A-07 026129 (NIPPON STEEL CHEM. CO. LTD.), 27.Januar 1995,**
- **PATENT ABSTRACTS OF JAPAN vol. 18, no. 528 (C-1258), 6.Oktober 1994 & JP-A-06 184357 (ASAHI CHEM. IND. CO. LTD.), 5.Juli 1994,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 707 045 B1

## Beschreibung

Die Erfindung betrifft halogenfrei flammgeschützte, thermoplastische Formmassen aus Polycarbonat und Pfropfpolymerisat, die gegebenenfalls thermoplastisches Copolymerisat und/oder Polyalkylenterephthalat enthalten können, wobei Silikonharz in Kombination mit speziellen Phosphor-Verbindungen als Flammschutzmittel eingesetzt wird.

In US-P 5 061 745 und US-P 5 030 675 werden flammwidrige, thermoplastische Formmassen aus aromatischem Polycarbonat, ABS-Polymerisat, Copolymerisat bzw. Polyalkylenterephthalat sowie Monophosphaten und fluorierten Polyolefinen als Flammschutzmittel bzw. als Antidrippingmittel beschrieben. Als Nachteil der fluorierten Polyolefine ist ihr Halogengehalt und der damit im Brandfall austretende Fluorwasserstoff zu nennen. Die Mitverwendung von speziellen Polytetrafluorethylen ermöglichte bislang aber allein selbstverlöschende Formmassen aus aromatischen Polycarbonaten, gegebenenfalls thermoplastischen Copolymerisaten und thermoplastischen Polyalkylenterephthalaten sowie Pfropfpolymerisaten mit der Bewertung V-O bei 1,6 mm dicken Prüfkörpern nach UL-94.

In EP-A 0 363 608 werden Polymermischungen aus aromatischem Polycarbonat, Co- und Pfropfpolymerisaten sowie oligomeren Phosphaten auf Basis von z.B. Hydrochinon und Resorcin als Flammschutzadditive beschrieben. Der effektive Flammschutz von V-O/1,6 mm nach UL-94 wird nur in Gegenwart von Polytetrafluorethylen bewirkt.

In den US-Patentschriften 4 273 691, 4 387 176, 4 536 529, 4 871 795 und 5 242 744 werden Thermoplaste mit einem Flammschutzsystem aus Silikonöl bzw. aus einer Mischung aus einem Silikonöl und einem Silikonharz sowie einer Metallseife (Mg-Stearat) und gegebenenfalls Magnesiumhydroxid beansprucht. Als weitere zusätzliche Flammschutzadditive werden halogenhaltige Flammschutzmittel (Dekabromdiphenylether), auch mit Antimontrioxid, und Ammoniumpolyphosphat mit mehrwertigen Alkoholen aufgeführt. Als Thermoplaste stehen Polypropylen und andere Polymerisate im Vordergrund, Polycarbonat und z.B. Polyester werden teils allgemein erwähnt. Hier muß darauf hingewiesen werden, daß Polycarbonat durch die Mitverwendung von Magnesiumverbindungen eine deutliche Einbuße seiner guten mechanischen Eigenschaften erleidet, V-O/3,2 mm nur bei Mitverwendung von Halogen erreichbar ist (s. US-P 4 387 176, Spalte 2, Zeilen 12 bis 20) und Phosphorsäureester nicht mitverwendet werden.

Die EP-A 0 520 186 beansprucht flammgeschützte Formmassen aus Polycarbonat, auch in Mischung mit ABS-Komponenten, die als Flammschutzmittel eine Phosphorverbindung, eine Borverbindung, ein Polyorganosiloxan und/oder ein fluorhaltiges Harz enthalten. Aus den Beispielen und Vergleichsbeispielen geht hervor, daß der angestrebte Flammschutz von V-O/1,6 mm nur bei Mitverwendung von Triphenylphosphat, Zinkborat und Polydimethylsiloxan und/oder Polytetrafluorethylen erreicht werden kann, ohne Zinkborat mit Polydimethylsiloxan wird V-O/1,6 mm verfehlt (Vergleichsbeispiel 4), mit Polytetrafluorethylen statt Polyorganosiloxan wird V-1/1,6 mm erzielt (vgl. Vergleichsbeispiel 5).

Die DE-OS 4 301 730 beschreibt nahezu analog zur EP-A 520 186 den effektiven Flammschutz von Polycarbonat-Formmassen, statt einer Borverbindung (Zinkborat) werden Zinksalze von Carbonsäuren (z.B. Zinkacetat) mitverwendet. Fehlt diese Komponente, so wird mit Triphenylphosphat und Dimethylsiloxan V-O/1,6 mm ebenfalls nicht erreicht (z.B. Vergleichsbeispiel 6 - 8).

In US-P 5 100 958 wird die Herstellung von Cofällungen aus Silikonharzen und Pfropfpolymerisaten vom ABS-Typ sowie die Mischung dieser Cofällung mit Polycarbonat und Styrol/Acrylnitril-Copolymerisat beansprucht. Für einen effektiven Flammschutz von V-O/1,6 mm ist als zusätzliches Flammschutzmittel Triphenylphosphat mitzuverwenden, außerdem muß das Polycarbonat 10 Gew.-% Tetrabrombisphenol-A enthalten (s. Tabelle I, Spalte 7, Zeile 23). Halogenfreier Flammschutz ist mit den Formmassen von US-P 5 100 958 nicht erreichbar.

In EP-A 0 594 021 werden flammwidrige Polycarbonat-ABS-Formmassen offenbart, welche Polyalkylenterephthalat und Polytetrafluorethylen enthalten, wobei als Flammschutzmittel ein oligomeres Phosphat eingesetzt wird.

In DE-A 4 040 243 werden flammwidrige Polycarbonat-ABS- Polyalkylenterephthalat-Formmassen offenbart, welche als Flammschutzmittel bestimmte monomere Phosphate und als Antidrippingmittel Polytetrafluorethylen und/oder ein Silikonharz enthalten.

Es wurde gefunden, daß bei Verwendung von 0,5 bis 5 Gew.-% Silikonharz in Kombination mit 3 bis 18 Gew.-% Phosphorverbindung gemäß der unten beschriebenen Komponente E) Formmassen aus thermoplastischen aromatischen Polycarbonaten, gegebenenfalls thermoplastischen Copolymerisaten und thermoplastischen Polyalkylenterephthalaten sowie Pfropfpolymerisaten ein Selbstverlöschen ohne brennendes Abtropfen nach UL-94 mit der Bewertung V-O bis V-1 bei 1,6 mm dicken Prüfkörpern erzielt wird. Das bisher als Antidrippingmittel eingesetzte Polytetrafluorethylen wird nicht benötigt. Die erfindungsgemäßen Formmassen ermöglichen damit im Brandfall vollkommen halogenfrei hochwirksame, selbstverlöschende Formmassen. Die Verwendung der unten beschriebenen Komponente E.2) ermöglicht dabei eine verbesserte Spannungsrißbeständigkeit, was für die Herstellung dünnwandiger Gehäuseteile besonders wichtig ist. Die Formmassen zeigen bezüglich Schlag- und Kerbschlagzähigkeit, der Wärmeformbeständigkeit, der Oberflächenbeschaffenheit und der Migration bei Lagerung ein gutes Eigenschaftsprofil.

Gegenstand der vorliegenden Erfindung sind halogenfrei flammgeschützte, im Brandfall nicht brennend abtropfende thermoplastische Polycarbonat-Formmassen, bestehend aus

A) 50 bis 95 Gew.-%, vorzugsweise 60 bis 90 Gew.-%, thermoplastischem aromatischem Polycarbonat,

B) 0 bis 20 Gew.-%, vorzugsweise 1 bis 15 Gew.-%, Copolymerisat bzw. Polykondensat bestehend aus

B.1) thermoplastischen Copolymerisat aus

B.1.1) 50 bis 95 Gew.-% Styrol, α-Methylstyrol, kernalkyliertem Styrol, $C_1$-$C_8$-Alkylacrylat, $C_1$-$C_8$-Alkylmethacrylat oder Mischungen daraus und

B.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid, Vinylacetat oder Mischungen daraus und/oder

B.2) thermoplastischem Polyalkylenterephthalat,

C) 3 bis 18 Gew.-%, vorzugsweise 5 bis 15 Gew.-%, Pfropfpolymerisat, hergestellt aus

C.1) 5 bis 90 Gew.-%, vorzugsweise 30 bis 80 Gew.-%, einer Mischung aus

C.1.1) 50 bis 95 Gew.-% Styrol, α-Methylstyrol, kernalkyliertem Styrol, $C_1$-$C_8$-Alkylacrylat, $C_1$-$C_8$-Alkylmethacrylat oder Mischungen daraus und

C.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid oder Mischungen daraus, auf

C.2) 10 bis 95 Gew.-%, vorzugsweise 20 bis 70 Gew.-%, Kautschuk mit einer Glastemperatur $TG \leq 10$ °C,

D) 0,5 bis 5 Gew.-%, vorzugsweise 1 bis 3 Gew.-%, Silikonharz,

E) 3 bis 18 Gew.-%, vorzugsweise 5 bis 15 Gew.-%, Phosphorsäureester aus

E.1) Phosphorverbindungen der Formel (I),

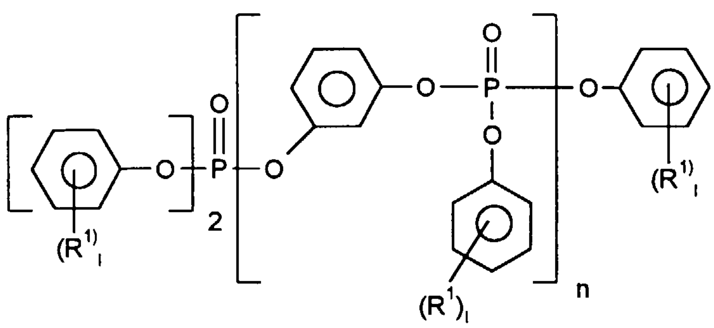

(I)

worin

n die Zahlen 1 bis 5,

$R^1$ Methyl und

1 die Zahlen 0 bis 5, vorzugsweise 0 und 1 bis 3, sind,

oder

E.2) einer Mischung aus Phosphorverbindungen der Formel (I) und Phosphor-verbindungen der Formel (II),

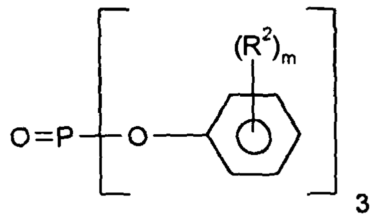

(II)

worin

$R^2$ Methyl und

m die Zahlen 0 oder 1 bis 5, vorzugsweise 0 und 1 bis 3, sind,

wobei die Menge an Phosphorverbindung gemäß Formel (II) in der Phosphatmischung aus E.1) und E.2) maximal 35 Gew.-%, vorzugsweise maximal 30 Gew.-%, beträgt.

Komponente A)

Die erfindungsgemäß geeigneten, thermoplastischen Polycarbonate gemäß Komponente A) können sowohl Homo- als auch Copolycarbonate aus den Diphenolen der Formel (III) sein,

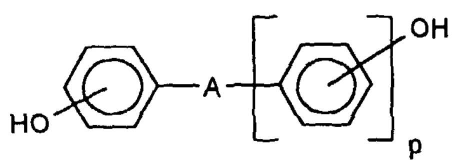

(III)

worin

p 1 oder Null ist und

A eine Einfachbildung, $C_1$-$C_5$-Alkylen, $C_2$-$C_5$-Alkyliden, $C_5$-$C_6$- gegebenenfalls durch Methylgruppen substituiertes Cycloalkyliden, -O-, -S- und -$SO_2$- sein können.

Die Polycarbonate gemäß Komponente A) können sowohl linear als auch verzweigt sein, sie können aromatisch gebundene Methylgruppen enthalten und sind halogenfrei. Die Polycarbonate der Komponente A) können sowohl einzeln als auch im Gemisch eingesetzt werden.

Die Diphenole der Formel (III) sind entweder literaturbekannt oder nach literaturbekannten Verfahren herstellbar. Die Herstellung der erfindungsgemäß geeigneten Polycarbonate gemäß Komponente A) ist ebenfalls literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Geeignete Diphenole der Formel (III) sind z.B. Hydrochinon, Resorcin, 4,4'-Dihydroxydiphenyl, 2,2-Bis-(4-hydroxyphenyl)-propan (Bisphenol-A), 2,4-Bis-(4-hydroxyphenyl)-2-methylbutan, 2,2-Bis-(4-hydroxy-3,5-dimethylphenyl)-propan, 1,1-Bis-(4-hydroxyphenyl)-cyclohexan oder 1,1-Bis-(4-hydroxyphenyl)-3,3,5-trimethylcyclohexan. Bevorzugte Diphenole der Formel (I) sind 2,2-Bis-(4-hydroxyphenyl)-propan und 1,1-Bis-(4-hydroxyphenyl)-cyclohexan. Es können auch Mischungen von Diphenolen eingesetzt werden, z.B. aus Bisphenol-A und bis zu 60 Mol-% 1,1-Bis-(4-hydroxyphenyl)-3,3,5-trimethylcyclohexan.

Geeignet sind sowohl Homopolycarbonate als auch Copolycarbonate. Zur Herstellung erfindungsgemäßer Copolycarbonate A) können auch 1 bis 25 Gew.-%, vorzugsweise 2,5 bis 25 Gew.-% (bezogen auf die Gesamtmenge an einzusetzenden Diphenolen), Diphenole der Formel (IIIa) verwendet werden,

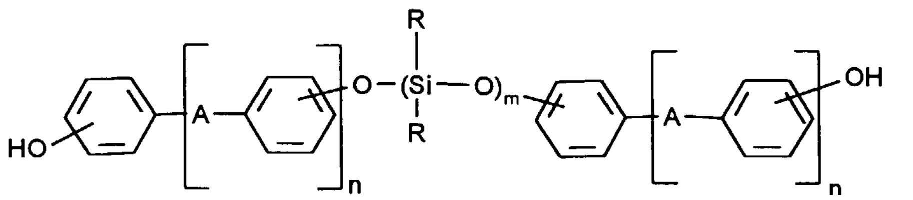

(IIIa)

worin -A- die für Formel (III) genannte Bedeutung hat, n 1 oder null ist, die R's gleich oder verschieden sind und ein linerares $C_1$-$C_{20}$-Alkyl, verzweigtes $C_3$-$C_{20}$-Alkyl oder $C_6$-$C_{20}$-Aryl, vorzugsweise $CH_3$, sind und m eine ganze Zahl zwischen5 und 100, vorzugsweise zwischen 20 und 80 ist. Polydiorganosiloxane mit Hydroxyaryloxy-Endgruppen gemäß Formel (IIIa) sind bekannt (s. beispielsweise US-Patent 3 419 634) bzw. nach literaturbekannten Verfahren herstellbar. Die Herstellung Polydiorganosiloxan-haltiger Copolycarbonate wird z.B. in DE-OS 3 334 782 beschrieben.

Die Polycarbonate A) können teilweise oder vollständig durch aromatische Polyestercarbonate ersetzt sein.

Geeignete Kettenabbrecher sind z.B. Phenol oder p-tert.-Butylphenol, aber auch langkettige Alkylphenole wie 4-(1,3-Tetramethyl-butyl)-phenol gemäß DE-OS 2 842 005 oder Monoalkylphenole oder Dialkylphenole mit insgesamt 8 bis 20 C-Atomen in den Alkylsubstituenten gemäß deutscher Patentanmeldung 3 506 472, wie z.B. p-Nonylphenol, 2,6-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (III).

Die erfindungsgemäß geeigneten Polycarbonate gemäß Komponente A) können in bekannter Weise verzweigt sein, und zwar vorzugsweise durch den Einbau von 0,05 bis 2 Mol-%, bezogen auf die Summe der eingesetzten Diphenole, an drei- oder mehr als dreifunktionellen Verbindungen, z.B. solchen mit drei oder mehr als drei phenolischen OH-Gruppen.

Die erfindungsgemäß geeigneten Polycarbonate haben mittlere Gewichtsmittelmolekulargewichte ($\overline{M}_w$, gemessen z.B. durch Ultrazentrifugation oder Streulichtmessung) von 10 000 bis 200 000, vorzugsweise von 20 000 bis 80 000.

<u>Komponente B.1)</u>

Erfindungsgemäß einsetzbare Vinyl-(Co)Polymerisate gemäß Komponente B.1) sind harzartig, thermoplastisch und kautschukfrei. Sie sind solche aus wenigstens einem Monomeren aus der Reihe Styrol, $\alpha$-Methylstyrol, kernalkyl-substituiertem Styrol, $C_1$-$C_8$-Alkylacrylat, $C_1$-$C_8$-Alkylmethacrylat (Komponente B.1.1) mit wenigstens einem Monomeren aus der Reihe Acrylnitril, Methacrylnitril, $C_1$-$C_8$-Alkylmethacrylat, $C_1$-$C_8$-Alkylacrylat, Maleinsäureanhydrid, N-substituiertem Maleinimid und/oder Vinylacetat (Komponente B.1.2).

$C_1$-$C_8$-Alkylacrylate bzw. $C_1$-$C_8$-Alkylmethacrylate sind Ester der Acrylsäure bzw. Methacrylsäure und einwertiger Alkohole mit 1 bis 8 C-Atomen. Besonders bevorzugt sind Methacrylsäuremethylester, -ethylester und -propylester. Als besonders bevorzugter Methacrylester wird Methacrylsäuremethylester genannt.

Thermoplastische Copolymerisate mit einer Zusammensetzung gemäß Komponente B.1) können bei der Pfropfpolymerisation zur Herstellung der Komponente C) als Nebenprodukte entstehen, besonders dann, wenn große Mengen Monomere auf kleine Mengen Kautschuk gepfropft werden. Die erfindungsgemäß einzusetzende Menge an Copolymerisat B.1) bezieht diese Nebenprodukte der Pfropfpolymerisation nicht mit ein.

Die thermoplastischen Copolymerisate B.1) enthalten 50 bis 95 Gew.-%, vorzugsweise 60 bis 90 Gew.-% Komponente B.1.1) und 5 bis 50 Gew.-%, vorzugsweise 10 bis 40 Gew.-%, Komponente B.1.2).

Besonders bevorzugte Copolymerisate B.1) sind solche aus Styrol mit Acrylnitril und gegebenenfalls mit Methylmethacrylat, aus $\alpha$-Methylstyrol mit Acrylnitril und gegebenenfalls mit Methylmethacrylat, oder aus Styrol und $\alpha$-Methylstyrol mit Acrylnitril und gegebenenfalls mit Methylmethacrylat.

Die Styrol-Acrylnitril-Copolymerisate gemäß Komponente B.1) sind bekannt und lassen sich durch radikalische Polymerisation, insbesondere durch Emulsions-, Suspensions-, Lösungs- oder Massepolymerisation herstellen. Die Copolymerisate gemäß Komponente B.1) besitzen vorzugsweise Molekulargewichte $\overline{M}_w$ (Gewichtsmittel, ermittelt durch Lichtstreuung oder Sedimentation) zwischen 15 000 und 200 000.

Besonders bevorzugte erfindungsgemäße Copolymerisate B.1) sind auch statistisch aufgebaute Copolymerisate aus Styrol, Maleinsäureanhydrid und/oder N-substituiertem Maleinimid, die durch eine kontinuierliche Masse- oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol/Maleinsäureanhydrid-Copolymeren können innerhalb weiter Grenzen variiert werden. Der bevorzugte Gehalt an Maleinsäureanhydrid liegt zwischen 5 und 25 Gew.-%.

Die Molekulargewichte (Zahlenmittel $\overline{M}_n$) der erfindungsgemäß geeigneten statistisch aufgebauten Styrol/Maleinsäureanhydrid-Copolymeren gemäß Komponente B.1) können in weiten Bereichen variieren. Besonders bevorzugt ist der Bereich von 60 000 bis 200 000. Bevorzugt ist für diese Produkte eine Grenzviskosität von 0,3 bis 0,9 dl/g (gemessen in Dimethylformamid bei 25 °C).

Anstelle von Styrol können die Vinylcopolymerisate B.1) auch kernsubstituierte Styrole wie Vinyltoluole, 2,4-Dimethylstyrol und andere halogenfreie substituierte Styrole wie α-Methylstyrol enthalten.

Komponente B.2)

Die Polyalkylenterephthalate der Komponente B.2) sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthal säurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäure mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2,-Bis-(4-hydroxycyclohexyl)-propan, 2,4-Dihydroxy-1,1,3,3-tetramethyl-cyclobutan, 2,2,-Bis-(4-β-hydroxyethoxy-phenyl)-propan und 2,2-Bis(4-hydroxypropoxy-phenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate. Bevorzugte Mischungen enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 - 1,2 dl/g, gemessen in Phenol/o-Dichlorbenzol (1:1 Gew.-Tle.) bei 25 °C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Komponente C)

Die Pfropfpolymerisate C) werden durch radikalische Copolymerisation der Monomergemische C.1) aus C. 1.1) und C.1.2) in Gegenwart der zu pfropfenden Kautschuke C.2) hergestellt und sind durchweg bekannt. Bevorzugte Herstellungsverfahren für die Pfropfpolymerisate C) sind Emulsions-, Lösungs-, Masse- oder Suspensionspolymerisation. Besonders bevorzugte Pfropfpolymerisate C) sind die sogenannten ABS-Polymerisate.

Beispiele für Monomere C.1) sind nach C.1.1) Styrol, α-Methylstyrol, p-Methylstyrol, Methylmethacrylat oder Mischungen daraus, Beispiele für Monomere nach C.1.2) sind Acrylnitril, Methacrylnitril, Methylmethacrylat, n-Butylacrylat, t-Butylacrylat, Maleinsäureanhydrid und N-Phenylmaleinimid oder Mischungen daraus. Bevorzugte Monomere nach C.1.1) sind Styrol, α-Methylstyrol und Methylmethacrylat. Bevorzugte Monomere nach C.1.2) sind Acrylnitril, Maleinsäureanhydrid und Methylmethacrylat. Besonders bevorzugte Monomere sind Styrol und Acrylnitril.

Zur Herstellung der Pfropfpolymerisate gemäß Komponente C) geeignete Kautschuke C.2) sind insbesondere Polybutadiene, Polyisoprene, Styrol-Butadien-Copolymerkautschuke, Acrylnitril-Butadien-Copolymerkautschuke mit Gelgehalten (gemessen bei 20 °C) größer als 30 Gew.-%, Acrylatkautschuke, EPDM(Ethylen-Propylen-Dien-Monomer)-Kautschuke und Siliconkautschuke.

Bevorzugte Kautschuke C.2) sind Dienkautschuke (z.B. auf Basis Butadien, Isopren etc.) oder Gemische von Dienkautschuken oder Copolymerisate von Dienkautschuken oder deren Gemische mit weiteren copolymerisierbaren

Monomeren, z.B. gemäß C.1.1) und C.1.2), mit der Maßgabe, daß die Glasübergangstemperatur der Komponente C. 2) unterhalb 10 °C, vorzugsweise unterhalb -10 °C, liegt.

Besonders bevorzugte Polymerisate C.) sind z.B. ABS-Polymerisate, wie sie in der DE-OS 2 035 390 oder in der DE-OS 2 248 242 beschrieben sind.

Geeignete Acrylatkautschuke C.2) sind solche auf Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, $\alpha$-Methylstyrol, kernalkyliertes Styrol, Methylmethacrylat, Acrylamide und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomerer enthalten. Solche Vernetzer sind z.B. Alkylendioldi(meth)-acrylate, Polyester-di(meth)-acrylate, Divinylbenzol, Trivinylbenzol, Triallylcyanurat, Allyl(meth)-acrylat, Butadien oder Isopren.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen. Besonders bevorzugte vernetzende Monomere sind hier Triallylcyanurat, Triallylisocyanurat, Trivinylcyanurat, Triacryloylhexahydro-s-triazin, Triallylbenzole. Die Menge der vernetzenden Monomere beträgt vorzugsweise 0,02 bis 5,0 Gew.-%, insbesondere 0,05 bis 2,0 Gew.-%, bezogen auf die Pfropfgrundlage C.2). Bei cyclischen vernetzenden Monomeren mit mindestens 3 ethylenisch ungesättigten Gruppen ist es vorteilhaft, die Menge auf unter 1 Gew.-% der Pfropfgrundlage C.2) zu beschränken.

Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungestättigten Monomerem, wie Styrol und/oder Acrylnitril, als Kern enthalten.

Bevorzugte Kautschuke zur Herstellung der Pfropfpolymerisate C) sind reine Dien- und Acrylatkautschuke.

Weitere geeignete Pfropfgrundlagen gemäß C.2) sind Silikonkautschuke mit pfropfaktiven Stellen wie sie in DE-OS 3 704 657, DE-OS 3 704 655 und DE-OS 3 631 539 beschrieben werden.

Die Kautschuke liegen in den Pfropfpolymerisaten C) in Form wenigstens partiell vernetzter Teilchen einer mittleren Teilchengröße von 0,1 bis 3 µm, insbesondere 0,2 bis 0,6 µm vor. Sie sind wenigstens teilvernetzt, das heißt, sie besitzen Gelgehalte von größer 20 Gew.-%, besonders größer 50 Gew.-%, besonders bevorzugt im Bereich von 73 bis 98 Gew.-% (gemessen in Toluol).

<u>Komponente D)</u>

Die erfindungsgemäßen Silikonharze der vorliegenden Erfindung sind fest, pulverförmig und Hydroxylgruppen-haltig. Sie weisen die Summenformel (IV) auf,

$$R_xSi(OR')_yO_{\frac{4-x-y}{2}} \qquad (IV)$$

worin

R für einen einwertigen Kohlenwasserstoffrest steht, der gegebenenfalls selbst substituiert sein kann, insbesondere aber eine Methyl- oder Phenylgruppe bedeutet,

R' eine Alkylgruppe oder ein Wasserstoffrest ist,

x einen Wert von 0,75 bis 1,75,

y einen Wert von 0,0001 bis 0,5 besitzen und

worin das Silikonharz aufgebaut ist aus Einheiten der Formel $SiO_{4/2}$, $RSiO_{3/2}$, $R_2SiO_{2/2}$ und/oder $R_3SiO_{1/2}$.

Die Herstellung der Silikonharze der Formel (IV) ist bekannt. Zu ihrer Weiterverarbeitung bzw. Verwendung liegen sie in Form von Lösungen in geeigneten Lösungsmitteln, auch in Lösung von Polydimethylsiloxanen, in Form von lösungsmittelhaltigen, wäßrigen Emulsionen oder hundertprozentig vor. Eine weitere vorteilhafte Anwendungsform ist die Cofällung von Dispersionen aus Polymerisaten und Pfropfpolymerisaten mit Emulsionen von lösungsmittelhaltigen Silikonharzen. Sie gewährleistet feinste Verteilung in der Kunststoff-Formmasse.

Komponente E.1)

Die erfindungsgemäßen Polymermischungen enthalten als Flammschutzmittel Phosphorverbindungen der Formel (I),

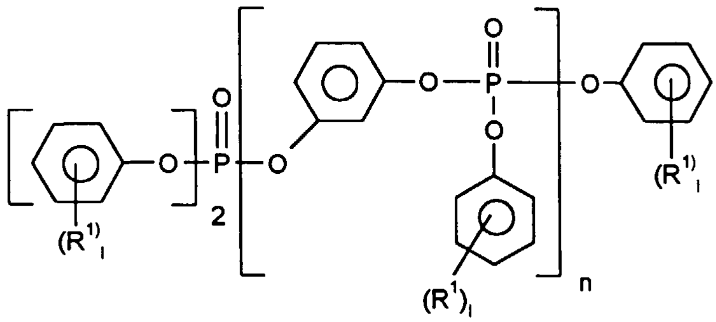

(I)

worin n, $R^1$ und 1 die oben genannte Bedeutung haben.
Als erfindungsgemäße Komponente E.1) können auch Mischungen verschiedener Phosphate eingesetzt werden. In diesem Fall hat n einen Durchschnittswert zwischen 1 und 5, vorzugsweise 1 und 2.
Als Phosphorverbindung der Formel (I) wird vorzugsweise m-Phenylen-bis-(diphenylphosphat) mit n gleich 1 und 2 bzw. zwischen 1 und 2 eingesetzt.

Komponente E.2)

Als Flammschutzmittel können die erfindungsgemäßen Mischungen weiterhin eine Mischung aus Phosphorverbindung(en) der Formel (I) und Phosphorverbindung(en) der Formel (II),

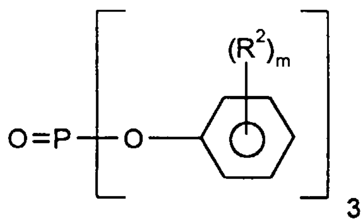

(II)

worin

$R^2$ und m die oben genannte Bedeutung haben,

enthalten.
Als Phosphorverbindung der Formel (II) wird vorzugsweise Triphenylphosphat eingesetzt.
Die Mischung enthält vorzugsweise 2 bis 30 Gew.-% Phosphorverbindung der Formel (II), bezogen auf 100 Gew.-% E.1 und E.2.
Die Phosphate sind generell nach bekannten Verfahren herstellbar (siehe beispielsweise Ullmann, Enzyklopädie der technischen Chemie, Bd. 18, S. 301 ff, 1979; Houben-Weyl, Methoden der Organischen Chemie, Bd. 12/1, S. 43; Beilstein, Bd. 6, S. 177).
Die erfindungsgemäßen Formmassen können ferner übliche Additive wie Gleit- und Entformungsmittel, Fließmittel, Nukleiermittel, Antistatika, Stabilisatoren, Füll- und Verstärkungsmittel sowie Farbstoffe und Pigmente sowie als weiteres Flammschutzmittel für die Polycarbonatkomponente das Salz einer halogenfreien Sulfonsäure enthalten. Bevorzugte Verstärkungsstoffe sind Glasfasern, bevorzugte Füllstoffe Glaskugeln, Glimmer, Quarz, Talkum, Wollastonit, bevorzugte Pigmente Ruß und Titandioxid. Bevorzugtes Salz ist das Kaliumsalz der Diphenylsulfonsulfonsäure.
Die erfindungsgemäßen thermoplastischen Formmassen, enthaltend die Komponenten A) bis E), werden

hergestellt, indem man die jeweiligen Bestandteile in bekannter Weise vermischt und bei Temperaturen von 200 - 300 °C in üblichen Aggregation wie Innenknetern, Extrudern oder Doppelwellenschnecken schmelzcompoundiert.

Die Vermischung der einzelnen Bestandteile kann in bekannter Weise sowohl sukzessiv als auch simultan erfolgen, und zwar bei höherer Temperatur.

Gegenstand der vorliegenden Erfindung ist somit auch ein Verfahren zur Herstellung von thermoplastischen Polycarbonatformmassen bestehend aus den Komponenten A) bis E), das dadurch gekennzeichnet ist, daß man die jeweiligen der vorstehend genannten Bestandteile in bekannter Weise vermischt und danach bei Temperaturen von 200 °C bis 300 °C in üblichen Aggregaten schmelzcompoundiert oder schmelzextrudiert.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind Gehäuseteile jeder Art (z.B. für Haushaltsgeräte und Büromaschinen) oder Abdeckplatten für den Bausektor, Teile für den Kfz-Sektor. Sie werden außerdem auf dem Gebiet der Elektrotechnik eingesetzt, weil sie sehr gute elektrische Eigenschaften besitzen.

Besonders geeignet sind die Formmassen zur Herstellung von dünnwandigen Formteilen (z.B. Datentechnik-Gehäuseteile), an die besondere hohe Ansprüche an Kerbschlagzähigkeit, Spannungsrißverhalten und Formbeständigkeit der eingesetzten Kunststoffe gestellt werden.

Teilchengröße bedeutet immer mittlerer Teilchendurchmesser $d_{50}$, ermittelt durch Ultrazentrifugenmessungen nach W. Scholtan et al., Kolloid-Z. und Z. Polymere 250 (1972) 782 - 796.

## Beispiele

Verwendete Materialien

Komponente A) (PC 1)

Polycarbonat auf Basis Bisphenol-A mit einer relativen Lösungsviskosität von 1,34, gemessen in Methylenchlorid bei 25 °C und einer Konzentration von 0,5 g/100 ml.

Komponente A) (PC 2)

Polycarbonat auf Basis Bisphenol-A mit einer relativen Lösungsviskosität von 1,29, gemessen in Methylenchlorid bei 25 °C und einer Konzentration von 0,5 g/100 ml.

Komponente B) (SAN)

Styrol/Acrylnitril-Copolymerisat mit einem Styrol/Acrylnitril-Verhältnis von 72:28 und einer Grenzviskosität von 55 dl/g (Messung in Dimethylformamid bei 20 °C).

Komponente C) (ABS)

Pfropfpolymerisat von 45 Gew.-% Styrol/Acrylnitril-Gemisch im Verhältnis 72:28 auf 55 Gew.-% teilchenförmigem vernetztem Polybutadienkautschuk (mittlerer Teilchendurchmesser $d_{50}$ gleich 0,4 µm, hergestellt durch Emulsionspolymerisation.

Komponente D) (M120)

Baysilone-Harz M 120 XB, Lösungsmittel im Rotationsverdampfer entfernt, 100 %ig (Methylsilikonharz der Bayer AG).

Komponente D) (SFR100)

SFR100 (Methylsilikonharz in Polydimethylsiloxan der General Electric Silicones).

Komponente D) (P500)

Baysilone-Harz P 500 50 % X/C, Lösungsmittel im Rotationsverdampfer entfernt, 100 %ig (Phenylsilikonharz der Bayer AG).

Komponente E.1) (RDP)

m-Phenylen-bis-(diphenylphosphat) (Fyroflex RDP der Firma AKZO B.V.).

Komponente E.2) (RDP+TPP)

Mischung aus 75,0 Gew.-% m-Phenylen-bis-(diphenylphosphat) (s. Komponente E.1) und 25,0 Gew.-% Triphenylphosphat (Disflamoll TP der Firma Bayer AG).

Weitere Phosphatkomponente (TPP)

Triphenylphosphat (Disflamoll TP der Bayer AG)

Weitere Phosphatkomponente (TIPP)

Triisopropylphenylphosphat (Reofos 95 der Firma CIBA-GEIGY INDUSTRIAL CHEMICALS).

Herstellung und Prüfung der Formmassen

Die Herstellung der flammwidrigen thermoplastischen Formmassen erfolgte durch Kneten in einem Kleinkneter vom Typ W 50 E der Firma Brabender OHG Duisburg im Temperaturbereich von 210 bis 230 °C, einer Drehzahl von 60 $Min^{-1}$ und einer Knetdauer von 10 Min. Die so hergestellte Formmasse wurde auf einer elektrisch beheizten Laborpresse vom Typ Polystat 200 T der Firma Schwabenthan zu Platten von 2,0 bzw. 1,6 mm gepreßt, die Preßtemperatur betrug 200 °C, der Preßdruck 200 bar und die Dauer 5 Min.

**Tabelle 1:** Vergleichsbeispiele, eingesetzte Komponenten (Angaben in Gew.-%)

| Komponente | A) PC1 | A) PC2 | B) SAN | C) ABS | D) M120 | D) SFR100 | D) P500 | E.1) RDP | E.2) RDP+TPP | TPP | TIPP |
|---|---|---|---|---|---|---|---|---|---|---|---|
| Vergleich 1 | 70,0 | | 5,0 | 10,0 | | | | 15,0 | | | |
| Vergleich 2 | | 70,0 | 5,0 | 10,0 | | | | 15,0 | | | |
| Vergleich 3 | 70,0 | | 7,0 | 10,0 | 1,0 | | | | | 12,0 | |
| Vergleich 4 | 70,0 | | 7,0 | 10,0 | | 1,0 | | | | 12,0 | |
| Vergleich 5 | 70,0 | | 6,0 | 10,0 | | | 2,0 | | | 12,0 | |
| Vergleich 6 | 70,0 | | 4,0 | 10,0 | 1,0 | | | | | 15,0 | |
| Vergleich 7 | 70,0 | | 4,0 | 10,0 | | 1,0 | | | | 15,0 | |
| Vergleich 8 | 70,0 | | 3,0 | 10,0 | | | 2,0 | | | 15,0 | |
| Vergleich 9 | 70,0 | | 4,0 | 10,0 | 1,0 | | | | | | 15,0 |
| Vergleich 10 | 70,0 | | 4,0 | 10,0 | | 1,0 | | | | | 15,0 |
| Vergleich 11 | 70,0 | | 3,0 | 10,0 | | | 2,0 | | | | 15,0 |
| Vergleich 12 | 69,7+0,3 % PTFE | | 5,0 | 10,0 | | | | 15,0 | | | |

**Tabelle 2:** erfindungsgemäße Beispiele, eingesetzte Komponenten (Angaben in Gew.-%)

| Komponente | A) PC1 | A) PC2 | B) SAN | C) ABS | D) M120 | D) SFR100 | D) P500 | E.1) RDP | E.2) RDP+TPP |
|---|---|---|---|---|---|---|---|---|---|
| Beispiel 1 | 70,0 | | 4,0 | 10,0 | 1,0 | | | 15,0 | |
| Beispiel 2 | | 70,0 | 4,0 | 10,0 | 1,0 | | | 15,0 | |
| Beispiel 3 | 70,0 | | 4,0 | 10,0 | 1,0 | | | | 15,0 |
| Beispiel 4 | 70,0 | | 4,0 | 10,0 | | 1,0 | | 15,0 | |
| Beispiel 5 | | 70,0 | 4,0 | 10,0 | | 1,0 | | 15,0 | |
| Beispiel 6 | 70,0 | | 4,0 | 10,0 | | 1,0 | | | 15,0 |
| Beispiel 7 | 70,0 | | 3,0 | 10,0 | | | 2,0 | 15,0 | |
| Beispiel 8 | | 70,0 | 3,0 | 10,0 | | | 2,0 | 15,0 | |
| Beispiel 9 | 70,0 | | 3,0 | 10,0 | | | 2,0 | | 15,0 |
| Beispiel 10 | Zusammensetzung wie Beispiel 1 | | | | | | | | |
| Beispiel 11 | Zusammensetzung wie Beispiel 2 | | | | | | | | |
| Beispiel 12 | Zusammensetzung wie Beispiel 3 | | | | | | | | |
| Beispiel 13 | Zusammensetzung wie Beispiel 4 | | | | | | | | |
| Beispiel 14 | Zusammensetzung wie Beispiel 5 | | | | | | | | |
| Beispiel 15 | Zusammensetzung wie Beispiel 6 | | | | | | | | |
| Beispiel 16 | Zusammensetzung wie Beispiel 7 | | | | | | | | |
| Beispiel 17 | Zusammensetzung wie Beispiel 8 | | | | | | | | |

Aus den Platten wurden die benötigten Prüfstäbe gesägt, diese den folgenden Tests unterzogen:

- Schlagzähigkeit nach DIN 43 543 ($a_n$),
- Wärmeformbeständigkeit nach DIN 53 460 (Vicat B),
- Sauerstoffindex (LOI-Wert) nach ASTM D-2863-77,

- Brandtest nach Vorschrift Underwriter Laboratories (UL) 94.

Das Spannungsrißverhalten wurde an Stäben der Abmessung 80x10x4 mm, Preßtemperatur 220 °C, untersucht. Als Testmedium wurde eine Mischung aus 60 Vol.-% Toluol und 40 Vol.-% Isopropanol verwendet. Die Probekörper wurden mittels einer Kreisbogenschablone vorgedehnt (Vordehnung in Prozent) und bei Raumtemperatur im Testmedium gelagert. Das Spannungsrißverhalten wurde über die Rißbildung bzw. den Bruch in Abhängigkeit von der Expositionszeit im Testmedium beurteilt.

Tabelle 3 zeigt die erhaltenen Prüfdaten.

Tabelle 3:

| Prüfdaten | | | | | |
|---|---|---|---|---|---|
| | $a_n$ | Vicat B | LOI- | UL 94-Bewertung | |
| | $kJ/m^2$ | °C | Index % $O_2$ | Dicke des Prüfkörpers | Nachbrennzeit, Sek. |
| Vergleich 1 | 46/n.g.* | 87 | 28,5 | V-2/2,1 mm | 60 |
| Vergleich 2 | 45/n.g. | 87 | - | V-2/2,1 mm | 74 |
| Vergleich 3 | 47/n.g. | 92 | 27,0 | n.b./2,1 mm | 160 |
| Vergleich 4 | 46/n.g. | 92 | 29,5 | V-2/2,1 mm | 148 |
| Vergleich 5 | 48/n.g. | 91 | 27,5 | V-2/2,1 mm | 175 |
| Vergleich 6 | 46/n.g. | 80 | 26,5 | V-1/2,1 mm | 50 |
| Vergleich 7 | 43/n.g. | 82 | 30,5 | V-1/21 mm | 58 |
| Vergleich 8 | 42/n.g. | 79 | 28,5 | V-1/2,1 mm | 92 |
| Vergleich 9 | 44/n.g. | 92 | 26,5 | V-2/2,1 mm | 133 |
| Vergleich 10 | 47/n.g. | 81 | 30,0 | V-1/2,1 mm | 112 |
| Vergleich 11 | 43/n.g. | 87 | 28,0 | V-2/2,1 mm | 111 |
| Vergleich 12 | 53/n.g. | 92 | 33,0 | V-0/2,1 mm | 12 |
| Beispiel 1 | 54/n.g. | 91 | 30,0 | V-0/2,1 mm | 33 |
| Beispiel 2 | 37/n.g. | 92 | 29,5 | V-0/2,1 mm | 20 |
| Beispiel 3 | 48/n.g. | 95 | 27,5 | V-0/2,1 mm | 36 |
| Beispiel 4 | 53/n.g. | 89 | 30,0 | V-0/2,1 mm | 16 |
| Beispiel 5 | 48/n.g. | 88 | 32,5 | V-0/2,1 mm | 8 |
| Beispiel 6 | 45/n.g. | 91 | 34,5 | V-0/2,1 mm | 10 |
| Beispiel 7 | 46/n.g. | 87 | 30,5 | V-0/2,1 mm | 9 |
| Beispiel 8 | 64/n.g. | 85 | 30,5 | V-0/2,1 mm | 17 |
| Beispiel 9 | 52/n.g. | 85 | 31,0 | V-1/1,6 mm | 55 |
| Beispiel 10 | 23/n.g. | 91 | 30,0 | V-0/1,6 mm | 48 |
| Beispiel 11 | 23/n.g. | 92 | 29,5 | V-0/1,6 mm | 44 |
| Beispiel 12 | 21/n.g. | 95 | 27,5 | V-1/1,6 mm | 87 |
| Beispiel 13 | 24/n.g. | 89 | 30,0 | V-0/1,6 mm | 36 |
| Beispiel 14 | 21/n.g. | 88 | 32,5 | V-0/1,6 mm | 39 |
| Beispiel 15 | 22/n.g. | 91 | 34,5 | V-0/1,6 mm | 34 |
| Beispiel 16 | 26/n.g. | 87 | 30,5 | V-1/1,6 mm | 123 |
| Beispiel 17 | 21/n.g. | 85 | 30,5 | V-1/1,6 mm | 96 |

* n.g. = nicht gebrochen

Die Formmasse des Beispiels 6 (mit RDP+TPP) zeigt gegenüber der des Beispiels 4 (mit RDP allein) verbessertes Spannungsrißverhalten (bei Vorspannung 2,4 % Oberrisse und Anlösen nach 10 Minuten gegenüber 5 Minuten).

Aus den Tabellen 1 bis 3 geht hervor, daß die erfindungsgemäßen Formmassen (Beispiel 1 bis 17)

- mit einem Gehalt von 1 bzw. 2 Gew.-% Silikonharz und 15 Gew.-% m-Phenylen-bis-(diphenylphosphat) ein V-0 bzw. V-1 bei 2,1 mm (Beispiele 1, 2, 4, 5, 7, 8), ja sogar bei 1,6 mm dicken Prüfkörpern (Beispiele 10, 11, 13, 14, 16 und 17),
- mit einem Gehalt von 1 bzw. 2 Gew.-% Silikonharz und 15 Gew.-% Gemisch aus m-Phenylen-bis-(diphenylphosphat) und Triphenylphosphat (75 und 25 Gew.-%) ebenfalls V-0 bzw. V-1 bei 2,1 bzw. 1,6 mm (Beispiele 3, 6 und 9 sowie 12 und 15),
- Schlagzähigkeiten und Wärmeformbeständigkeiten auf hohem Niveau aufweisen.

Ferner geht aus den Vergleichsbeispielen (Vergleich 1 bis 12) hervor, daß

- bei fehlender Silikonharz-Komponente den Proben nur ein V-2/2,1 mm zukommt (Vergleiche 1 und 2),
- bei einem Silikonharzgehalt von 1 bzw. 2 Gew.-% und einem Triphenylphosphatgehalt von 12 Gew.-% nur "nicht bestanden" oder V-2 bei 2,1 mm erzielt wird (Vergleich 3, 4 und 5),
- bei einem Silikonharzgehalt von 1 bzw. 2 Gew.-% und einem Triphenylphosphatgehalt von 15 Gew.-% zwar V-1 bei 2,1 mm zu erzielen ist, die Erweichungstemperatur aber auf ca. 80 °C absinkt (Vergleiche 6, 7 und 8),
- bei Anwendung von Tri-isopropylphenyl-phosphat als anderem Phosphat ebenfalls nur V-2 bei 2,1 mm erreicht wird (Vergleiche 10, 11 und 12).

Die Beispiele 1, 4 und 7 zeigen, daß kleine Mengen Silikonharz mit üblichen Mengen m-Phenylen-bis-(diphenylphosphat), auch in Mischung mit Triphenylphosphat (Beispiele 3, 6 und 9), verbunden mit dem großen Vorteil der Halogenfreiheit die Antidripping-Eigenschaft des Polytetrafluorethylens (Vergleich 12) übernehmen können.

**Patentansprüche**

**1.** Thermoplastische Formmassen, bestehend aus

A) 50 bis 95 Gew.-% thermoplastischem aromatischem Polycarbonat,

B) 0 bis 20 Gew.-% Copolymerisat bzw. Polykondensat aus

B.1) thermoplastischem Copolymerisat aus

B.1.1) 50 bis 95 Gew.-% Styrol, α-Methylstyrol, kernalkyliertem Styrol, $C_1$-$C_8$-Alkylacrylat, $C_1$-$C_8$-Alkylmethacrylat oder Mischungen daraus, und

B.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid, Vinylacetat oder Mischungen daraus und/oder

B.2) thermoplastischem Polyalkylenterephthalat,

C) 3 bis 18 Gew.-% Pfropfpolymerisat hergestellt aus

C.1) 5 bis 90 Gew.-% einer Mischung aus

C.1.1) 50 bis 95 Gew.-% Styrol, α-Methylstyrol, kernalkyliertem Styrol, $C_1$-$C_8$-Alkylacrylat, $C_1$-$C_8$-Alkylmethacrylat oder Mischungen daraus, und

C.1.2) 5 bis 50 Gew.-% Acrylnitril, Methacrylnitril, $C_1$-$C_8$-Alkylacrylat, $C_1$-$C_8$-Alkylmethacrylat, Maleinsäureanhydrid, N-substituiertem Maleinimid oder Mischungen daraus, auf

C.2) 10 bis 95 Gew.-% einem Kautschuk mit einer Glastemperatur TG ≤ 10 °C,

D) 0,5 bis 5 Gew.-% Hydroxylgruppen enthaltendes Silikonharz der Formel (IV),

$$R_xSi(OR')_yO_{\frac{4-x-y}{2}} \qquad \text{(IV)}$$

worin

R für einen einwertigen Kohlenwasserstoffrest steht, der gegebenenfalls selbst substituiert sein kann, insbesondere aber eine Methyl- oder Phenylgruppe bedeutet,

R' eine Alkylgruppe oder ein Wasserstoffrest ist,

x einen Wert von 0,75 bis 1,75,

y einen Wert von 0,0001 bis 0,5 besitzen und

worin das Silikonharz aufgebaut ist aus Einheiten der Formel $SiO_{4/2}$, $RSiO_{3/2}$, $R_2SiO_{2/2}$ und/oder $R_3SiO_{1/2}$.

E) 3 bis 18 Gew.-% Phosphorsäureester aus

E.1) Phosphorverbindungen der Formel (I)

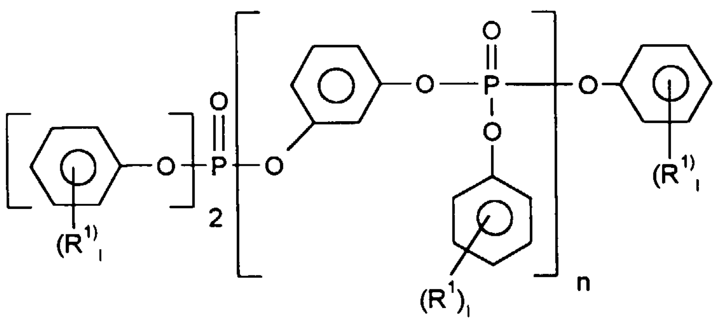

(I)

worin

n die Zahlen 1 bis 5,

$R^1$ Methyl und

1 die Zahlen 0 bis 5 sind,

oder

E.2) einer Mischung aus Phosphorverbindungen der Formel (I) und Phosphorverbindungen der Formel (II),

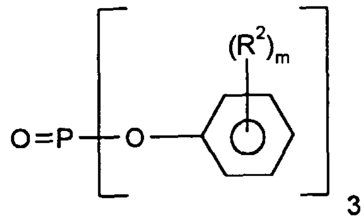

(II)

worin

$R^2$ Methyl und

m die Zahlen 0 bis 5 sind,

wobei die Menge an Phosphorverbindung gemäß Formel (II) in der Phosphatmischung aus E.1) und E.2) maximal 35 Gew.-% beträgt.

**2.** Thermoplastische Formmassen gemäß Anspruch 1, wobei die Komponenten

A) in einer Menge von 60 bis 90 Gew.-%,

B) in einer Menge von 1 bis 15 Gew.-%,

C) in einer Menge von 5 bis 15 Gew.-%,

D) in einer Menge von 1 bis 3 Gew.-% und

E) in einer Menge von 5 bis 15 Gew.-%

enthalten sind.

**3.** Thermoplastische Formmassen gemäß Anspruch 1, dadurch gekennzeichnet, daß als Komponente E) Mischungen aus m-Phenylen-bis-(diphenylphosphat) und Triphenylphosphat eingesetzt werden.

**4.** Thermoplastische Formmassen gemäß Anspruch 1, die zusätzlich Zusatzstoffe wie Gleit- und Entformungsmittel, Fließmittel, Nukleiermittel, Stabilisatoren, Antistatika, Füll- und Verstärkungsmittel, Farbstoffe und/oder Pigmente sowie das Salz einer halogenfreien Sulfonsäure enthalten.

**5.** Verfahren zur Herstellung der Polycarbonatformmassen gemäß Anspruch 1, wobei man die Komponenten A) bis E) in bekannter Weise vermischt und bei Temperaturen von 200 °C bis 300 °C in üblichen Aggregation schmelzcompoundiert oder schmelzextrudiert.

**6.** Verwendung der thermoplastischen Formmassen gemäß Anspruch 1 zur Herstellung von Formkörpern.

**7.** Formkörper, hergestellt aus thermoplastischen Formmassen gemäß Anspruch 1.

## Claims

**1.** Thermoplastic moulding compositions, consisting of

A) 50 to 95 wt.% of thermoplastic aromatic polycarbonate,

B) 0 to 20 wt.% of a copolymer or polycondensate consisting of

B.1) a thermoplastic copolymer of

B.1.1) 50 to 95 wt.% of styrene, α-methylstyrene, ring-alkylated styrene, $C_1$-$C_8$-alkyl acrylate, $C_1$-$C_8$-alkyl methacrylate or mixtures thereof and

B.1.2) 5 to 50 wt.% of acrylonitrile, methacrylonitrile, $C_1$-$C_8$-alkyl acrylate, $C_1$-$C_8$-alkyl methacrylate, maleic anhydride, N-substituted maleic imide, vinyl acetate or mixtures thereof and/or

B.2) a thermoplastic polyalkylene terephthalate,

C) 3 to 18 wt.% of a graft polymer prepared from

C.1) 5 to 90 wt.% of a mixture of

C.1.1) 50 to 95 wt.%, of styrene, α-methylstyrene, ring-alkylated styrene, $C_1$-$C_8$-alkyl acrylate, $C_1$-$C_8$-alkyl methacrylate or mixtures thereof and

C.1.2) 5 to 50 wt.% of acrylonitrile, methacrylonitrile, $C_1$-$C_8$-alkyl acrylate, $C_1$-$C_8$-alkyl methacrylate, maleic anhydride, N-substituted maleic imide or mixtures thereof, on

C.2) 10 to 95 wt.% of rubber with a glass transition temperature TG ≤ 10°C,

D) 0.5 to 5 wt.% of hydroxyl group-containing silicone resin of the formula (IV),

$$R_xSi(OR')_yO_{\frac{4-x-y}{2}} \quad \text{(IV)}$$

in which

R represents a monovalent hydrocarbon group, which itself may optionally be substituted, but which represents in particular a methyl or a phenyl group,

R' is an alkyl group or a hydrogen atom,

x has a value of 0.75 to 1.75 and

y has a value of 0.0001 to 0.5

and in which the silicone resin is built up from units of the formula $SiO_{4/2}$, $RSiO_{3/2}$, $R_2SiO_{2/2}$ and/or $R_3SiO_{1/2}$

E) 3 to 18 wt.% of phosphates consisting of

E.1) phosphorus compositions of the formula (I),

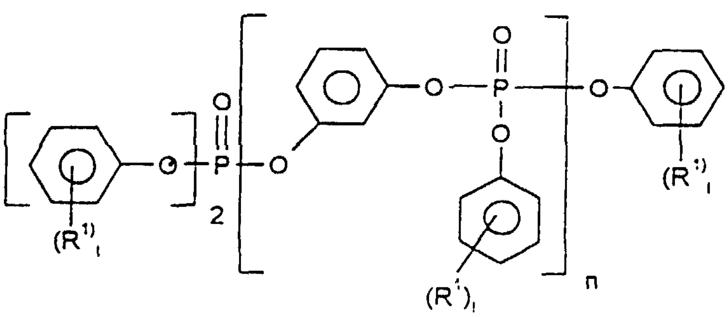

(I)

in which

n represents the numbers 1 to 5,

$R^1$ represents methyl and

1 represents the numbers 0 to 5

or

E.2) a mixture of phosphorus compositions of the formula (I) and phosphorus compositions of the formula (II),

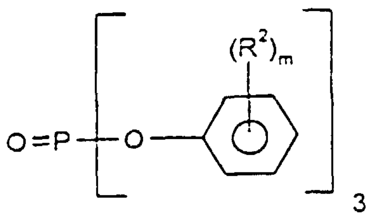

(II)

in which

$R^2$ represents methyl and
m represents the numbers 0 to 5,

wherein the amount of phosphorus composition of the formula (II) in the phosphate mixture of E.1) and E.2) is a maximum of 35 wt.%.

**2.** Thermoplastic moulding compositions according to Claim 1 wherein the components are present in the following amounts:

A) in an amount of 60 to 90 wt.%,

B) in an amount of 1 to 15 wt.%,

C) in an amount of 5 to 15 wt.%,

D) in an amount of 1 to 3 wt.% and

E) in an amount of 5 to 15 wt.%.

**3.** Thermoplastic moulding compositions according to Claim 1, characterised in that mixtures of m-phenylene-bis (diphenyl phosphate) and triphenyl phosphate are used as component E).

**4.** Thermoplastic moulding compositions according to Claim 1 which contain additional additives such as lubricants and mould release agents, flow control agents, nucleating agents, stabilisers, antistatic agents, fillers and reinforcing materials, colorants and/or pigments as well as the salt of a halogen-free sulfonic acid.

**5.** A process for preparing polycarbonate moulding compositions according to Claim 1, wherein components A) to E) are mixed in a known manner and melt compositioned or melt extruded at temperatures of 200°C to 300°C in conventional equipment.

**6.** Use of the thermoplastic moulding compositions according to Claim 1 to produce moulded articles.

**7.** Moulded articles produced from thermoplastic moulding compositions according to Claim 1.

## Revendications

**1.** Compositions à mouler thermoplastiques, constituées de

A) 50 à 95 % en masse d'un polycarbonate aromatique thermoplastique,
B) 0 à 20 % en masse d'un copolymère ou d'un produit de polycondensation constitué

B.1) d'un copolymère thermoplastique de

B.1.1) 50 à 95 % en masse de styrène, d'α-méthylstyrène, de styrène alkylé sur le cycle, d'acrylate d'alkyle en $C_1$-$C_8$, de méthacrylate d'alkyle en $C_1$-$C_8$ ou de leurs mélanges, et
B.1.2) 5 à 50 % en masse d'acrylonitrile, de méthacrylonitrile, d'acrylate d'alkyle en $C_1$-$C_8$, de méthacrylate d'alkyle en $C_1$-$C_8$, d'anhydride maléique, de maléimide N-substitué, d'acétate de vinyle ou de leurs mélanges et/ou

B.2) d'un poly(téréphtalate d'alkylène) thermoplastique,

C) 3 à 18 % en masse d'un polymère greffé préparé à partir de

C.1) 5 à 90 % en masse d'un mélange de

C.1.1) 50 à 95 % en masse de styrène, d'α-méthylstyrène, de styrène alkylé sur le cycle, d'acrylate d'alkyle en $C_1$-$C_8$, de méthacrylate d'alkyle en $C_1$-$C_8$ ou de leurs mélanges et de
C.1.2) 5 à 50 % en masse d'acrylonitrile, de méthacrylonitrile, d'acrylate d'alkyle en $C_1$-$C_8$, de méthacrylate d'alkyle en $C_1$-$C_8$, d'anhydride maléique, de maléimide N-substitué ou de leurs mélanges, sur

C.2) 10 à 95 % en masse de caoutchouc ayant une température de transition vitreuse inférieure ou égale $T_G$ à 10°C,

D) 0,5 à 5 % en masse d'une résine silicone contenant des groupes hydroxyle, de formule (IV)

$$R_xSi(OR')_yO_{\frac{4-x-y}{2}} \quad (IV)$$

dans laquelle

R représente un reste hydrocarboné monovalent, pouvant éventuellement être lui-même substitué, en particulier cependant un groupe méthyle ou phényle,
R' représente un groupe alkyle ou un reste d'hydrogène,
x a une valeur comprise entre 0,75 et 1,75,
y a une valeur comprise entre 0,0001 et 0,5,

la résine silicone étant constituée d'unités de formule $SiO_{4/2}$, $RSiO_{3/2}$, $R_2SiO_{2/2}$ et/ou $R_3SiO_{1/2}$,
E) 3 à 18 % en masse d'esters d'acides phosphoriques constitués

E.1) de composés du phosphore de formule (I)

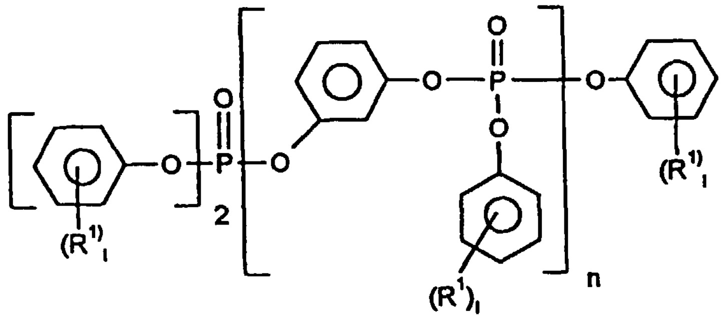

(I)

dans laquelle

n est un nombre de 1 à 5,
$R^1$ est un reste méthyle et
les 1 sont des nombres de 0 à 5,

ou
E2) d'un mélange de composés du phosphore de formule (I) et de composés du phosphore de formule (II)

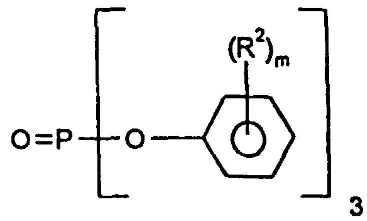

(II)

dans laquelle

$R^2$ est un reste méthyle et
les m sont des nombres de 0 à 5,
la quantité de composé de phosphore de formule (II) dans le mélange de phosphates constitué de E.1) et E.2) étant au maximum de 35 % en masse.

**2.** Compositions à mouler thermoplastiques selon la revendication 1, dans laquelle

le constituant A) est contenu en une quantité de 60 à 90 % en masse ;
le constituant B) est contenu en une quantité de 1 à 15 % en masse,
le constituant C) est contenu en une quantité de 5 à 15 % en masse,
le constituant D) est contenu en une quantité de 1 à 3 % en masse, et
le constituant E) est contenu en une quantité de 5 à 15 % en masse.

**3.** Compositions à mouler thermoplastiques selon la revendication 1, caractérisées en ce que l'on utilise comme constituant E) des mélanges de bis(diphénylphosphate) de m-phénylène et de phosphate de triphényle.

**4.** Compositions à mouler thermoplastiques selon la revendication 1, qui contiennent en outre des additifs comme des lubrifiants et des agents de démoulage, des agents d'écoulement, des agents de nucléation, des stabilisants, des antistatiques, des charges et des agents renforçants, des colorants et/ou des pigments, ainsi qu'un sel d'un acide sulfonique non halogéné.

**5.** Procédé de préparation des compositions à mouler à base de polycarbonates selon la revendication 1, selon lequel on mélange de façon connue les constituants A) à E) et on les soumet à un malaxage l'état fondu ou à une extrusion à l'état fondu, à des températures de 200°C à 300°C, dans des appareils classiques.

**6.** Utilisation des compositions à mouler selon la revendication 1 pour la fabrication d'objets moulés.

**7.** Objets moulés fabriqués à partir de compositions à mouler selon la revendication 1.